# EUROPEAN PATENT APPLICATION

(11) **EP 1 353 077 A1**
(43) Date of publication of application: **15.10.2003**
(21) Application number: 03013585.9
(22) Date of filing: 18.06.1999
(51) Int. Cl.: F16B 13/12

(54) **Anchor for friable meterial**

(30) Priority: 11.07.1998 GB 9815017
(62) Divisional of application: 99111759.9
(71) Applicant: Black & Decker Inc., Newark Delaware 19711 (US)
(72) Inventor: Anquetin, Robert, 91690 Fontaine la Rivière (FR)
(74) Representative: Bell, Ian Stephen

(57) **Abstract**

The invention relates to an anchoring member (10) for holding a fixing member in a friable material and comprising a head (14) having a central orifice (16) disposed on an axis (A) and having three anchoring blades (12) extending longitudinally from the head (14) in the direction of the axis (A) and disposed radially about the axis (A), with each blade (12) terminating in a point (20). Each of the blades (12) comprises two longitudinally extending wings (24 and 26) which are inclined relative to each other to present a substantially V-shaped cross section. The blades (12) are connected to the head by a neck (15) having a deformable region (55) which allows the blades (12) to be deformed when a fixing member (200) is inserted in the anchoring member to restrain such an anchoring member within a friable material.

## Description

The present invention relates to an anchoring member for holding a fixing member in a friable material such as plasterboard. More particularly, the invention relates to an anchoring member of the type having two or more blades extending from a substantially flat head, wherein the blades are hammered into the friable material to bring the head into abutment therewith whereby introduction of a fixing member into such an anchor causes the blades to move apart and restrain the anchor and fixing member within the friable material.

European Patent 0 274 816 discloses such an anchoring member which comprises a flat head drilled with a hole for the introduction of a fixing member, this anchoring member having two substantially flat blades extending from the flat head in a direction substantially perpendicular to the latter and which terminate in a point. In order to insert such an anchoring member into a friable material, the point of the blades is positioned against the material and the head of the anchoring member is struck with a hammer so that the adjacent blades are driven into the friable material until the head comes into abutment against the said material. When this anchoring member has been inserted into the friable material, a fixing member such as a screw is introduced between the two blades, via the hole provided in the head, which fixing member causes the blades to move apart in diverging directions so that they then take up a bearing position in the material in order to hold the anchoring member therein. This type of anchoring member is shaped from a relatively thin malleable metal sheet. This particular type of anchor disclosed in the above European patent further comprises a snap fitting means for holding the blades substantially together during the manufacturing stage. Such an anchoring member exhibits a number of disadvantages.

When using an anchor of this type having two substantially flat blades care must be taken when inserting the anchor into a friable material that the blades are substantially horizontal. Such an anchor would be intended to be load bearing i.e. to carry a weight (such as a picture) via the fixing member and should the anchor be inserted so that the blades are substantially vertical or, inclined substantially to the vertical then any downward exerted force applied to the fixing member when the anchor is secured in the friable material will produce a downward force on the anchor which will be transmitted to the blades whereby thin metal blades in a substantially vertical position will serve to "cut" through the friable material and thus substantially reduce the effectiveness of the wall anchor by damaging the friable material. A further disadvantage is involved with the necessity of manufacturing the anchor from a thin malleable material which then requires heat treatment to provide additional strength. The heat treatment requires that the blades be held together for the anchor to be effective and so requires the additional snap fitting arrangement as described by this earlier patent. The thin material is required so that the anchor can be easily hammered through the friable material. Thus an extra manufacturing step is required in production of such anchors adding to both time and cost of manufacture. In addition, the anchor itself, although folded from a single punched metal sheet requires an additional drilling process to produce the hole in the head to allow the fixing member to be inserted. This again adds a manufacturing step to the process, again increasing the time and cost.

A further disadvantage of the anchor member of the prior art is that, once a fixing member has been introduced into the anchoring member it is impossible to remove it without causing the anchoring member to come out of the material as a result of the blades closing together again elastically and sliding in the material towards the outside as the fixing member itself is withdrawn.

It is therefore an object of the present invention to provide a fixing member which alleviates the aforementioned problems and may be manufactured in a simple and cost effective manner.

According to the present invention there is provided an anchoring member for holding a fixing member in a friable material, comprising a head having a central orifice disposed on an axis and having a plurality of anchoring blades extending longitudinally from the head in a direction of the axis and being orientated in a substantially radial manner with respect to the axis, each blade terminating in a point, and characterised in that at least one of said plurality of blades comprises two longitudinally extending wings wherein a first wing is inclined relative to the second wing to present a substantially V-shaped cross section. Thus, by use a of a substantially V-shaped blade, irrespective of the orientation of the anchor when inserted in the friable material at least one blade will present a wing substantially horizontal within the friable material to thus evenly distribute any load placed on such an anchor and due to at least one substantially horizontally orientated force, will be restricted from cutting through such a friable material.

Preferably, each blade of the anchoring member will comprise two wings inclined relative to each other by an outwardly disposed wing, whereby the total angle presented by the plurality of wing angles of the plurality of blades will be 360°, thus ensuring that all the blades are in abutment with their adjacent neighbours. Usually, the intersection of the two wings of each of the blades will form a spine wherein the spines of all the blades will abut along the axis, thus providing additional rigidity to the anchor in an axial direction. Preferably, the anchoring member will comprise three substantially identical blades each having a wing angle between the wings of substantially 120°.

Preferably, each of the plurality of blades will comprise a weakened region towards the head which, upon an introduction of a fixing member through the orifice in the direction of the axis, will allow each of the blades to deform about this weakened region to move the blades away from the axis to permit passage of the fixing member.

In addition, it is preferred that each of the plurality of blades will comprise an inclined cam surface extending outwardly from the axis and intended to come into contact with the fixing member when inserted through the orifice to cause the blade to undergo cam deflection away from the axis and deform said weakened region as the fixing member is inserted. Thus, the blades of the anchor will be deformed to a position in order to restrain the anchor in the friable material and such defamation restricting any elastic biasing of the blades towards the undeflected position.

The anchoring member may also comprise a threaded region disposed about the axis between the head and the plurality of blades to allow a screw threaded fixing member to be inserted therein and secured to the anchor.

Preferably, the pointed free ends of each of the blades will abut at a point on the axis. The radial outer edges of each wing of each of the plurality of blades in the region of the blade point may also taper inwardly towards the axis in a longitudinal direction away from the head to create a point on the spine of each blade to allow the anchors to be readily inserted into a friable material. In such a manner it is preferred that the blades themselves are sharpened by providing an inclined surface between radial inner and radial outer faces of the blades away from the point in a direction along the axis A. Thus, such tapered blades allow for a gradual cutting into the friable material as the anchor is inserted therein and reduces damage to such friable material.

It is preferred that the anchor is formed from a one piece folded metal blank which may be punched out of a sheet of metal and folded accordingly without the necessity of additional manufacturing steps.

A preferred embodiment of the present invention will now be described, by way of example only, with reference to the accompanying illustrative drawings in which
Figure 1 is a side elevation of an anchor member;
Figure 2 is a plan view of a stamped metal blank for folding into the anchor member of Figure 1;
Figure 3 is a perspective view of one blade of the anchor member of Figure 1;
Figure 4 is a part section along the line IV-IV of Figure 3;
Figure 5 is an axial view of the wall anchor of Figure 1 when viewed from its point V; and
Figure 6 schematically illustrates the wall anchor of Figure 1 in use.

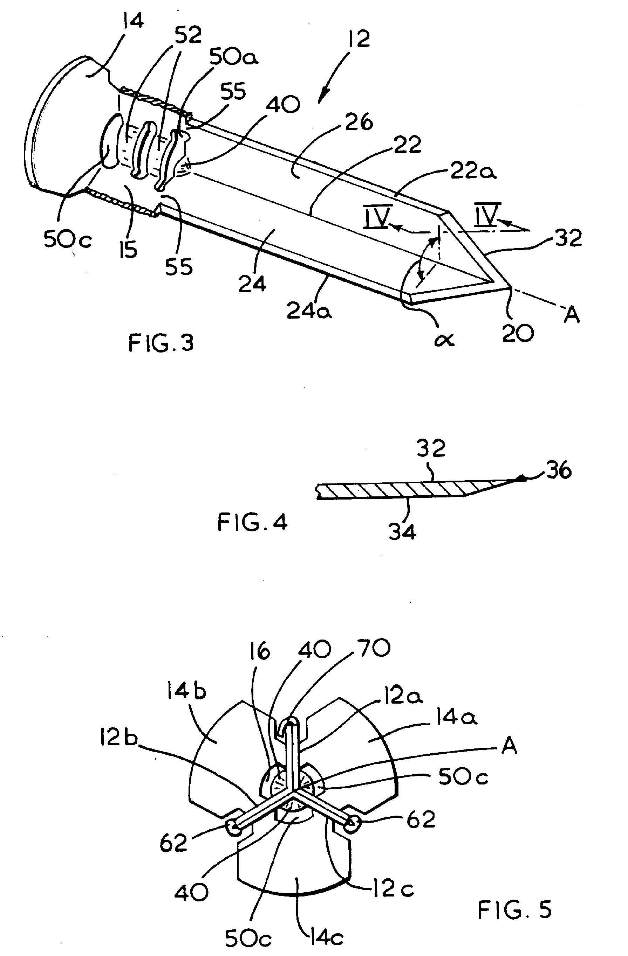

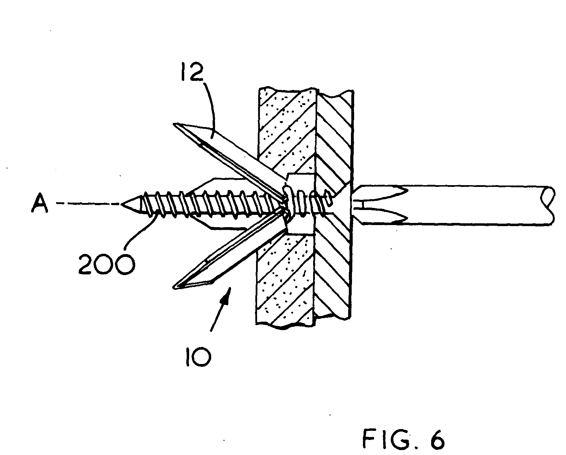

A wall anchor (10) comprises three substantially identical blades (12a, 12b and 12c) (shown general as (12) in Figure 3) disposed circumferential about a central axis (A) (Figure 5). The anchor (10) further comprises a head portion (14) having a substantially central aperture (16) (Figure 5) disposed co-axial to the axis (A). Each of the blades (12) are integrally connected with the head (14) by a neck portion (15).

Referring now to Figure 3, each of the blades (12) comprises a longitudinally extending blade of metal tapering to a point (20) and which is folded about a central longitudinally extending spine (22) to present two substantially similar wings (or faces) (24 and 26) inclined relative to each other at an angle α (wing angle) (Figure 3) which, in the preferred embodiment, is set at 120°. Thus, the blade presents a substantially V-shaped formation when viewed in section along the axis (A) whereby by reference to a V-shaped cross section is intended to indicate an angle α between said wings (22 and 24) ranging from 10° to 170°. Each of the wings (22 and 24) has an outwardly directed edge (22A) and (24A) respectively and which edges (22A) and (24A), towards the end remote from the head (14), respectively taper towards the spine (22) (axis (A)) in a longitudinal direction away from the head portion (14) to meet at a point (20) disposed on the spine (22) thereby forming a substantially arrow shaped point (20).

In addition, the tapered regions of the edges (22A) and (24A) of each blade are further sharpened, as seen in Figure 4 (which is a cross section view through the tapering edge (22A)), whereby in this tapered region the edge (22A) is inclined longitudinally from an inwardly directed surface (32) towards a outwardly directed surface (34) of the blade in a direction away from the point (20) to present a sharpened edge (36) along the extent of the tapered region of the edges (22A) and (24A) respectively.

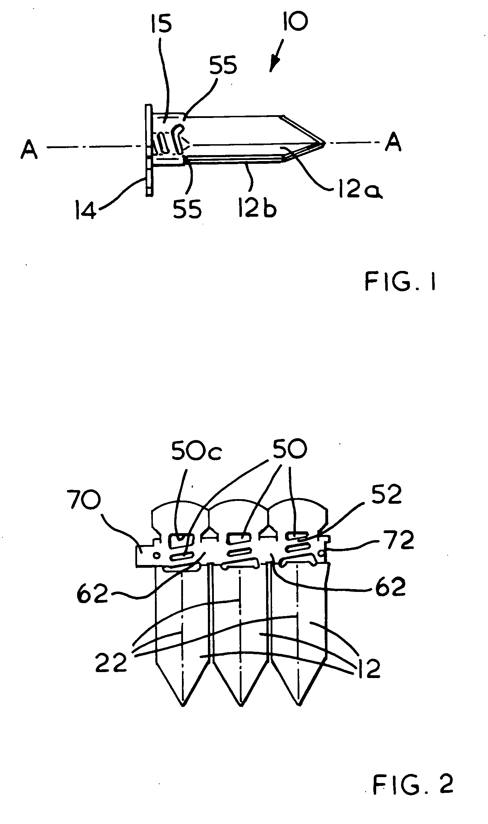

Each of the blades (12A, 12B, and 12C) further have an associated neck portions (15) and head portions (14A, 14B, 14C). As seen in Figure 2, the punched metal blank used to form the anchor (12) comprises three blades (12) each having an associated neck portion (15) and head portion (14) whereby each of the neck portions (15) are interconnected.

During manufacture, the head portions (14) are bent to produce a substantially flat head portion (14) perpendicular to the longitudinal direction of the blades (12) and the blades (12) themselves are folded along the respective spines (22) to the shape shown in Figure 3.

Furthermore, during the said folding stage of the manufacturing process, which will not be described in detail herein the folding of metal blanks is well known in the art and does not form part of the current invention, a forming press is carried out to shape the neck portion (16) and to create an inwardly directed cam surface (40) on the spine of each blade.

Each of the neck portions (15) comprise an array of stamped apertures shown generally as (50) in Figure 2. These apertures (50) which are punched out during the punch formation of the blank itself, serve to form a series of inclined bars (52) in each of the neck portions which are inclined with respect to the longitudinal direction of the blades (12). As can be seen from Figure 2 the array of apertures (50) and bars (52) in each neck portion (16) are positioned to present a substantially continuous array of bars which, when viewed in Figure 2, are uniformly inclined adjacent blades (12).

During the folding process of manufacturing or such anchors (10), the neck portion (15) undergoes a stamp forming process to deform each of the bars (52) radially outwardly of the spine (22) to present a curvature having a circumference substantially co-axial with the axis (A) (Figure 3). In addition, the spine (22) at an end of the blade remote from the point (20) and abutting a first aperture (50A) is partially deformed outwardly, away from the spine (22) and axis (A) to present a cam member (40) having an inwardly directed surface (directed towards the axis (A)) which is inclined in a direction along the axis (A) away from the head (14) and inwardly towards the axis (A).

Furthermore, the first aperture (50A) of the neck portion (16) further serve to create two weakened links (55) between the neck portion (15) and the blade (12), which provide for deformation of the blade (12) about the neck portion (16).

Following the folding of the head portions (14) and blades (12) of the metal blank of Figure 2, the blades are then folded radially about the axis (A) to bring the inwardly directed edges of the spines (22) into abutment along the axis (A) whereby the adjacent wings of adjacent blades (14) will abut one another due to the angle α between the wings of each blade being set at 120°. Thus, the metal blank is folded about two intersections (62) of the neck portion (16) (Figure 5). As can be seen from Figure 2, the neck portion (16) further comprises an outer lip (70) which when the blades are folded into abutment as shown in Figure 5 can be folded about the opposed free end (72) of the neck portion to hold the folded anchor (10) in the folded position with the spines (22) in abutment along the axis A.

As can be seen from Figures 2, 3 and 5, when the head (14) of each blade (12) has been folded to the position shown in Figure 3 the uppermost (50C) of each of the apertures (50) create a substantially radial aperture (16) co-axial about the axis (A). Furthermore, the three radially deformed bars (52) of each neck portion (15) are radially disposed about the axis (A) to present a substantially cylindrical channel about the axis (A) within the neck portion (16) leading inwardly from the head (14). Thus, this aperture (16) and the cylindrical channel within the neck portion (16) allows the passage of a substantially cylindrical fixing member such as a screw or nail. Furthermore, the continuous inclination of the bars (52) on adjacent parts of the neck (16) serve to create a substantially screw threaded inner surface of this neck channel for screw threaded engagement with a conventional screw.

Thus, in use, the three blades (12A, 12B, 12C) of the anchor (10) abut each other about the axis (A) to substantially reinforce on another where the spines (22) abut. The point (20) of the anchor (created from a combination of three points of each blade (12A, 12B, 12C)) may then be placed against a friable material such as plasterboard and driven home by use of a hammer. The sharpened edges (36) of the blades serve to more readily cut through the plasterboard during this operation and thus allow a thicker, hence stronger, metal sheet to be used to form such an anchor since the tapered cutting edge serves to gradually push the friable material out of the way of the thicker metal as it cuts through the plasterboard. As the anchor thus passes through the plasterboard in a longitudinal direction the cam surfaces (40) are thus brought into engagement with the uncut plasterboard and, due to their inclined nature, again serve to again cut through the plasterboard to slightly widen the aperture formed in the plasterboard by the point (20) in a gradual controlled manner whereby such an aperture is sufficiently large enough to accommodate the circumferentially formed bars (50A) without placing undue stresses on the friable material which could create disintegration in the region where the anchor is to be placed. Further movement of the anchor (10) into the friable material will bring the head portion (14) into flush abutment with the outer face of the friable material. When the anchoring member (10) is inserted into the friable material, the substantially V-shaped distribution of each of the blades (12) ensures that the anchoring member is held in the friable material in such a manner that at least one of the blades presents at least one of its wings substantially perpendicular to the vertical so as to present a substantially wide or flat blade portion to bear the weight of any load applied to the anchor and thus prevent the edges of the blades from cutting vertically downwards through the friable material under any such load.

A fixing member such as for example, a screw (200) can then be introduced into the anchoring member inserted in the friable material. This fixing member (200) may be introduced in the direction of the axis (A) (represented graphically in Figure 6) through the aperture (16) of the head portion (14) to bring it into screw threaded engagement with the bars (52) of the neck portion (16). This provides secure connection between the anchor member and the fixing member whereby continued insertion (by relative rotation between the fixing member and anchor member) will thus serve to screw the fixing member into the anchor member until the point of the fixing member is brought into engagement with the inwardly directed surface of the cam members (40) of each blade (12) whereby continued longitudinal displacement of the fixing member within the anchor (10) causes cam displacement of the blades (12) about the weakened regions (55) (disposed between the blades and the neck portions (15)) causing the blades (12) to move apart in diverging directions radially with respect to the axis (A) (Figure 6) in a non elastic manner. Thus, under the action of the fixing member, the blades (12) are splayed apart and are driven into the friable material in diverging directions and take up a load bearing position in the friable material (by way of their wings) in order to reliably hold the anchor member and inserted fixing member. Furthermore, when the fixing member is retracted (if required) from the anchor (10) the blades (12) remain in the splayed position as shown in Figure 6 due to the non-elastic defamation of the weakened regions (55). This allows the anchor member to be readily reused without fear of accidentally withdrawing it from the friable material.

It will be appreciated that the embodiment herein described is by way of example only and is not limiting to the scope of the present invention. To this end, there are several variations to the specific embodiment which may be readily achieved without detracting from the invention. In particular, whilst the preferred embodiment requires three blades, it should be appreciated that any number of two or more blades may be employed to achieve the same objectives. For example, if two blades are used, the angle α may be set at, for example 90°. Here, as the respective spines of such two blades are brought into abutment along the axis (A) the faces of each blade may be offset at an angle of again 90° from those of the adjacent blade. Again in such a manner, at least one of the faces of one of the blades will be substantially perpendicular to the vertical (by perpendicular it is taken to include a range of angles of not greater than 45° with respect to the perpendicular) to thus present a substantially increased cross sectional area of a blade to the vertical greater than that presented by a blade edge itself. Furthermore, it is quite feasible that four or more blades may be used, whereby the angle α will be varied accordingly. It will also be appreciated that it is not essential that each of the adjacent faces of adjacent blades abut one another but may be offset, as long as the spines of each blade are in abutment about the axis (A) to present a minimum cross sectional area to be driven within the friable material.

Furthermore, whilst again the preferred embodiment is limited to having two wings disposed about a spine it is feasible that the blade design may incorporate more than two wings. For example, the blade (12) might include a folded region to present three wings extending away from a spine (22) whereby again it is a requirement that the spines of the blades are in abutment along the axis (A). Again such a anchor will achieve the objectives of the present invention. Still further, whilst we have described the present embodiment as having bars (50) formed in the neck region (60) to create a screw threaded region, such a threaded region is not essential to the present invention or could be formed in numerous other methods, for example by screw tapping the inner surface of the neck following a folding stage in manufacture.

Furthermore, whilst it is appreciated that the central aperture (14) through the head (14) it is formed automatically by folding together the three blades (12) thus bringing the three outer apertures (50C) into circumferential alignment to create such an aperture (16) without the necessity of punching a hole through the metal, other manufacturing techniques to produce a wall anchor according to the present invention may be employed whereby it would be necessary to manually cut a hole through the head region (14) to create such a orifice at the axis (A).

As such, the present invention is in no way limited to the embodiment which has been described and shown in the figures, and it should be appreciated that a person skilled in the art would be able to modify this specific embodiment in several ways yet maintain the inventive concept.

## Claims

1. An anchoring member (14) for holding a fixing member (200) in a friable material, comprising a head (14) having a central orifice (16) disposed on an axis (A), having a plurality of anchoring blades (12) extending longitudinally from the head (14) in a direction of the axis (A) and being orientated in a substantially radial manner with respect to the axis (A) , each blade (12) terminating in a point (20), **characterised in that** at least one of said plurality of blades (12) comprises two longitudinally extending wings (24, 26) wherein a first wing (24) is inclined relative to the second wing (26) to present a substantially V-shaped cross section.

2. An anchoring member (10) as claimed in Claim 1 in which each blade (12) comprises two wings relatively inclined to each other by an outer wing angle α whereby the total angle presented by the plurality of wing angles α is 360°.

3. An anchoring member (10) as claimed in Claim 2 in which the intersection of the two wings of each of the blades forms a spine (22) wherein the spines (22) of all the blades (12) abut along the axis (A).

4. An anchoring member (10) as claimed in any one of the preceding claims wherein each of said plurality of blades (12) comprises a weakened region (55) towards said head (14) which, upon introduction of a fixing member (200) through the orifice (16) in the direction of the axis (A), allows each of said blades (12) to deform about this weakened region (55) to move said blades (12) away from said axis (A) to permit passage of said fixing member.

5. An anchoring member (10) as claimed in Claim 4 in which each of said plurality of blades (12) comprises an inclined cam surface (40) extending outwardly from the axis (A) so as to come into contact with the fixing member (200) when inserted through said orifice (16) to cause said blade (12) to be deflected away from said axis (A) and deform about said weakened region (55) as the fixing member is inserted.

6. An anchoring member (10) as claimed in any one of the preceding claims comprising a threaded region (52) disposed about said axis (A) between said head (14) and said plurality of blades (12).

7. An anchoring member (10) as claimed in any one of the preceding claims in which the pointed free ends (20) of each of said blades (12) abut at a point on the axis (A).

8. An anchoring member (10) as claimed in any one of the preceding claims wherein radial outer edges of each wing of each of said plurality of blades (12) in the region of said blade point (20) tapers radially inwards towards the axis (A) in a longitudinal direction away from the head (14) to create said point (20) on the spine of each blade.

9. An anchoring member (10) as claimed in Claim 8 wherein the tapered outer edges of said blades (12) are sharpened by providing an inclined surface between radial inner (32) and outer (34) faces of said blades (12) away from the point (20) along the axis (A).

10. An anchoring member (10) as claimed in any one of the preceding claims **characterised in that** it is formed from a one piece folded metal blank.

11. An anchoring member (10) as claimed in Claim 2 or any one of Claims 3 to 10 when appended to Claim 2 comprising three substantially identical blades (12) wherein the face angle α between the two wings of each blade is substantially 120°.
